# EUROPÄISCHE PATENTSCHRIFT

(11) **EP 4 024 825 B1**
(45) Veröffentlichungstag und Bekanntmachung des Hinweises auf die Patenterteilung: **29.11.2023**
(21) Anmeldenummer: 21205574.3
(22) Anmeldetag: 29.10.2021
(51) Int. Cl.: H04L 67/12, H04L 67/562, H04L 67/55, H04L 67/1001

(54) **VERFAHREN UND KOMMUNIKATIONSSYSTEM ZUM AUSTAUSCH VON DATEN ZWISCHEN MEHREREN FELDGERÄTEN**
METHOD AND COMMUNICATION SYSTEM FOR EXCHANGING DATA BETWEEN A PLURALITY OF FIELD DEVICES
PROCÉDÉ ET SYSTÈME DE COMMUNICATION DESTINÉS À L'ÉCHANGE DE DONNÉES ENTRE PLUSIEURS APPAREILS DE TERRAIN

(30) Priorität: 02.01.2021 DE 102021000005
(43) Veröffentlichungstag der Anmeldung: 06.07.2022
(73) Patentinhaber: Krohne Messtechnik GmbH, 47058 Duisburg (DE)
(72) Erfinder: Bublitz, Julia, 45699 Herten (DE); Keimling, René, 47228 Duisburg (DE); Hottgenroth, Wolfgang, 45259 Essen (DE)
(74) Vertreter: Gesthuysen Patentanwälte

(56) Entgegenhaltungen:
- EP-A2- 1 383 062
- WO-A1-2019/185238

## Beschreibung

Die Erfindung betrifft ein Verfahren zum Austausch von Daten zwischen mehreren Feldgeräten, wobei die Feldgeräte über einen Datenbroker mit einer Brokerfunktionalität in einer auf dem Publish-Subscribe-Prinzip beruhenden Kommunikationsverbindung stehen, wobei wenigstens ein Feldgerät wenigstens eine Nachricht mit einem Nachrichtentitel an den Datenbroker sendet, wobei wenigstens ein Feldgerät eine Nachricht mit zumindest einem bestimmten Bestandteil eines Nachrichtentitels bei dem Datenbroker abonniert, wobei die an den Datenbroker gesendete Nachricht von dem Datenbroker empfangen wird und der Datenbroker die empfangene Nachricht an das wenigstens eine Feldgerät weiterleitet, welches Feldgerät die Nachricht mit entsprechendem Bestandteil des Nachrichtentitels bei dem Datenbroker abonniert hat. Darüber hinaus betrifft die Erfindung auch ein ebensolches Kommunikationssystem mit mehreren Feldgeräten und wenigstens einem Datenbroker mit einer Brokerfunktionalität, wobei zum Austausch von Daten zwischen mehreren Feldgeräten die Feldgeräte über den Datenbroker in einer auf dem Publish-Subscribe-Prinzip beruhenden Kommunikationsverbindung stehen, wobei im Betrieb des Kommunikationssystems wenigstens ein Feldgerät wenigstens eine Nachricht mit einem Nachrichtentitel an den Datenbroker sendet, wobei wenigstens ein Feldgerät eine Nachricht mit zumindest einem bestimmten Bestandteil eines Nachrichtentitels bei dem Datenbroker abonniert, wobei die an den Datenbroker gesendete Nachricht von dem Datenbroker empfangen wird und der Datenbroker die empfangene Nachricht an das wenigstens eine Feldgerät weiterleitet, welches Feldgerät die Nachricht mit entsprechendem Bestandteil des Nachrichtentitels bei dem Datenbroker abonniert hat

Wenn hier von Feldgeräten die Rede ist, dann sind damit in erster Linie Feldgeräte der Prozess- und Automatisierungstechnik gemeint. Diese Feldgeräte sind "im Feld", also in einer industriellen Prozessumgebung installiert und werden als Sensoren und/oder Aktoren eingesetzt. Als Sensoren nehmen sie physikalische Zustandsgrößen des Prozesses auf, beispielsweise Temperaturen, Drücke, Durchflussmengen, Füllstände und pH-Werte, als Aktoren wirken sie auf den industriellen Prozess ein, beispielsweise als Pumpen, Stellventile, Heizungen, mechanische Antriebe usw. Die in einem Prozess installierten Feldgeräte sind üblicherweise über eine Kommunikationsverbindung miteinander verbunden, um Daten auszutauschen, beispielsweise um gemeinsam eine regelungstechnische Aufgabe in dem Prozess zu erfüllen.

Ein seit vielen Jahren bekanntes Prinzip der Realisierung einer Kommunikationsverbindung ist das eingangs genannte Publish-Subscribe-Prinzip, das in industriellen Anwendungen seinen Ursprung hat und dem in jüngerer Zeit durch Anwendungen im Umfeld des "Internet of Things (IoT)" wieder verstärkt Aufmerksamkeit zuteilwird. Bei diesem Kommunikationsprinzip wissen die beteiligten Kommunikationspartner, vorliegend in Form der Feldgeräte, nichts voneinander. Ein Feldgerät ist also nicht in der Lage, eine Nachricht direkt an ein anderes Feldgerät zu senden bzw. eine Nachricht direkt an ein anderes Feldgerät gezielt zu adressieren. Der Austausch von Nachrichten zwischen Feldgeräten geschieht über den Datenbroker. Die Nachrichten haben einen Nachrichtentitel und einen Nachrichteninhalt. Feldgeräte können Nachrichten an den Datenbroker senden (publish) und Feldgeräte können Nachrichten mit einem bestimmten Nachrichtentitel - oder dem Bestandteil eines Nachrichtentitels - beim datenbroker abonnieren (subscribe). Wenn der Datenbroker eine Nachricht von einem Feldgerät empfängt, wertet der Datenbroker den Nachrichtentitel der empfangenen Nachricht aus und sendet die Nachricht dann an Feldgeräte weiter, die Nachrichten dieses bestimmten Nachrichtentitels - oder eines Bestandteils dieses Nachrichtentitels - abonniert haben. Ein Beispiel für ein Protokoll, das das Publish-Subscribe-Prinzip realisiert, ist das Message Queue Telemetry Transport Protokoll (MQTT-Protokoll).

Ein Vorteil des Publish-Subscribe-Prinzips besteht darin, dass die einzelnen Feldgeräte zur Etablierung einer Kommunikation keine Kenntnis von der Struktur und den Teilnehmern des Kommunikationsnetzwerks haben müssen, um an der Kommunikation über das Netzwerk teilzunehmen.

Die Druckschrift WO 2019/185238 A1 offenbart ein Verfahren zum ereignisgesteuerten Abruf von Prozessdaten, unter Verwendung des Publish-Subscribe-Prinzips.

Die Druckschrift EP 1 383 062 A2 offenbart ein Verfahren zum Austausch von Daten zwischen Services in einem Fertigugsprozess.

Der Erfindung liegt die Erkenntnis zugrunde, dass es gerade bei regelungs- und prozesstechnischen Anwendungen vorteilhaft wäre, wenn ein Feldgerät Informationen von einem anderen Feldgerät aktiv anfordern könnte, obwohl die Feldgeräte nur mittels einer auf dem Publish-Subscribe-Prinzip beruhenden Kommunikationsverbindung miteinander in Verbindung stehen, die diese Funktionalität dem Prinzip nach nicht vorsieht.

Aufgabe der vorliegenden Erfindung ist es daher, das eingangs genannte Verfahren zum Austausch von Daten zwischen mehreren Feldgeräten, wobei die Feldgeräte über einen Datenbroker mit einer Brokerfunktionalität in einer auf dem Publish-Subscribe-Prinzip beruhenden Kommunikationsverbindung stehen, und das genannte Kommunikationssystem mit mehreren Feldgeräten und wenigstens einem Datenbroker mit einer Brokerfunktionalität so weiterzubilden, dass der bedarfsweise Austausch von Nachrichten zwischen Feldgeräten ermöglicht wird.

Die zuvor hergeleitete Aufgabe ist bei dem eingangs dargestellten Verfahren zum Austausch von Daten zwischen mehreren Feldgeräten und bei dem Kommunikationssystem mit mehreren Feldgeräten und einem Datenbroker dadurch gelöst, dass ein auf dem Request-Response-Prinzip beruhender Austausch von Daten zwischen einem anfragenden Feldgerät und einem antwortenden Feldgerät mit den Mitteln des Publish-Subscribe-Prinzips implementiert wird. Dies geschieht zunächst dadurch, dass eine eindeutige Feldgerätekennung des antwortenden Feldgerätes zumindest dem anfragenden Feldgerät bekannt gemacht wird. Wie dies im Einzelnen geschieht, spielt zunächst keine Rolle, es sind ohne Weiteres verschiedene Möglichkeiten denkbar. Jedenfalls hat das potenziell anfragende Feldgerät nunmehr Kenntnis davon, an welches andere, also potenziell antwortende Feldgerät, es eine Anfrage schicken könnte.

Ferner abonniert das antwortende Feldgerät Anfrage-Nachrichten, deren Nachrichtentitel eine Angabe zu seiner eigenen Feldgerätekennung, also zur Feldgerätekennung des antwortenden Feldgerätes, umfasst. Anfrage-Nachrichten sind also "normale" Nachrichten des Publish-Subscribe-Prinzips, die sich lediglich dadurch auszeichnen, dass ihr Nachrichtentitel eine Angabe zur Feldgerätekennung des antwortenden Feldgerätes, von dem eine Information angefragt wird, aufweist. Durch diese Angabe kann das Feldgerät, von dem eine Information abgefragt werden soll, praktisch direkt angesprochen werden, und zwar mit den Mitteln des Publish-Subscribe-Prinzips.

Wenn zuvor davon die Rede ist, dass der Nachrichtentitel eine Angabe zur Feldgerätekennung des antwortenden Feldgerätes umfasst, dann handelt es sich im einfachsten Fall um die Feldgerätekennung des antwortenden Feldgerätes selbst. Die Angabe zur Feldgerätekennung des antwortenden Feldgerätes kann aber auch aus der Feldgerätekennung des antwortenden Feldgerätes - in eindeutiger Weise - abgeleitet werden. Es soll damit zum Ausdruck gebracht werden, dass es sich bei der Angabe zur Feldgerätekennung des antwortenden Feldgerätes um eine Information handelt, die für das antwortenden Feldgerätes individuell kennzeichnend ist aber nicht zwingend identisch sein muss - aber identisch sein kann - mit der Feldgerätekennung. Es könnte beispielsweise aus Sicherheitsgründen ein Algorithmus in denjenigen Feldgeräten hinterlegt sein, die sich auf die hier dargestellte Art und Weise - request/response mit den Mitteln des publish/subscribe-Prinzips - untereinander austauschen können sollen. Anderen Feldgeräten soll dies verwehrt sein, wozu in ihnen einfach ein anderer Algorithmus zur Ableitung der Angabe aus der Feldgerätekennung hinterlegt ist.

Ferner abonniert das anfragende Feldgerät Antwort-Nachrichten, deren Nachrichtentitel eine dem anfragenden Feldgerät bekannte Anfrage-Kennung umfasst. Damit eröffnet das anfragende Feldgerät praktisch einen Kommunikationskanal mit den Mitteln des Publish-Subscribe-Prinzips, über den es unmittelbar ansprechbar ist.

Schließlich versendet das anfragende Feldgerät eine Anfrage-Nachricht an den Datenbroker, wobei der Nachrichtentitel der Anfrage-Nachricht die Anfrage-Kennung und die Angabe zur Feldgerätekennung des antwortenden Feldgerätes umfasst. Das antwortende Feldgerät erhält dann aufgrund des Abonnements der Anfrage-Nachrichten die Anfrage-Nachricht des anfragenden Feldgerätes. Das antwortende Feldgerät wertet dann die Anfrage-Nachricht aus und versendet eine entsprechende Antwort-Nachricht an den Datenbroker, wobei der Nachrichtentitel der Antwort-Nachricht zumindest die Anfrage-Kennung umfasst. Das anfragende Feldgerät erhält aufgrund des Abonnements der Antwort-Nachricht zwangsläufig die Antwort-Nachricht des antwortenden Feldgerätes.

Bei einer Weiterbildung des erfindungsgemäßen Verfahrens und des erfindungsgemäßen Kommunikationssystems ist vorgesehen, dass die Anfrage-Kennung eine unveränderliche Angabe zur Feldgerätekennung des anfragenden Feldgerätes ist oder ein eindeutiges Identifizierungszeichen für jede einzelne Anfrage. Wenn die Anfrage-Kennung eine unveränderliche Angabe zur Feldgerätekennung des anfragenden Feldgerätes ist, dann kann das anfragende Feldgerät nur erkennen, dass es eine Antwort auf eine Anfrage - die möglicherweise eine von mehreren seiner Anfragen ist - erhält. Erwartet das anfragende Feldgerät mehrere Antworten, müssen diese anhand anderer Kriterien unterschieden werden, beispielsweise durch eine zusätzliche Kennung des antwortenden Feldgerätes oder durch Auswertung des Nachrichteninhaltes. Ist die Anfrage-Kennung hingegen ein eindeutiges Identifizierungszeichen für jede Anfrage, lassen sich auch verschiedene Anfragen eindeutig allein anhand des Nachrichtentitels unterscheiden.

Eine weitere vorteilhafte Ausgestaltung des Verfahrens und des Kommunikationssystems zeichnet sich dadurch aus, dass das anfragende Feldgerät Antwort-Nachrichten abonniert, deren Nachrichtentitel zusätzlich die Angabe zur Feldgerätekennung des antwortenden Feldgerätes umfasst, und dass der Nachrichtentitel der Antwort-Nachricht zusätzlich die Angabe zur Feldgerätekennung des antwortenden Feldgerätes umfasst. Durch diese Maßnahme ist ohne Weiteres für das anfragende Feldgerät ersichtlich, von welchem Feldgerät es eine Antwort-Nachricht erhält. Wie zuvor ausgeführt, ermöglicht dies insbesondere das Arbeiten mit Anfrage-Kennungen, die eine unveränderliche Angabe zur Feldgerätekennung des anfragenden Feldgerätes sind.

Gemäß einer anderen Weiterbildung des Verfahrens und des Kommunikationssystems ist vorgesehen, dass das antwortende Feldgerät Anfrage-Nachrichten abonniert, deren Nachrichtentitel zusätzlich eine Request/Response-Kennung aufweisen, um eine Unterscheidbarkeit von Antwort-Nachrichten und Anfrage-Nachrichten allein durch Auswertung des Nachrichtentitels zu erreichen. Dazu abonniert das anfragende Feldgerät Antwort-Nachrichten, deren Nachrichtentitel zusätzlich eine Request/Response-Kennung aufweisen, ferner versendet das anfragende Feldgerät eine Anfrage-Nachricht an den Datenbroker, wobei der Nachrichtentitel der Anfrage-Nachricht zusätzlich eine Request/Response-Kennung aufweist. Das antwortende Feldgerät versendet die Antwort-Nachricht an den Datenbroker, wobei der Nachrichtentitel der Antwort-Nachricht zusätzlich eine Request/Response-Kennung aufweist, wobei die Request/Response-Kennung entweder eine Anfrage kennzeichnet (beispielsweise durch die Angabe "Request") oder eine Antwort kennzeichnet (beispielsweise durch die Angabe "Response"), sodass durch Auswertung der Request/Response-Kennung von einem empfangenden Feldgerät entschieden werden kann, ob es sich um eine Anfrage oder um eine Antwort auf eine Anfrage handelt.

Eine weitere Weiterentwicklung des Verfahrens und des Kommunikationssystems ist dadurch gekennzeichnet, dass das antwortende Feldgerät Anfrage-Nachrichten abonniert, deren Nachrichtentitel zusätzlich eine ReqResp-Kennung aufweisen, dass das anfragende Feldgerät Antwort-Nachrichten abonniert, deren Nachrichtentitel zusätzlich die ReqResp-Kennung aufweisen, dass das anfragende Feldgerät eine Anfrage-Nachricht an den Datenbroker versendet, wobei der Nachrichtentitel der Anfrage-Nachricht zusätzlich die ReqResp-Kennung aufweist, dass das antwortende Feldgerät die Antwort-Nachricht an den Datenbroker versendet, wobei der Nachrichtentitel der Antwort-Nachricht zusätzlich die ReqResp-Kennung aufweist, wobei die ReqResp-Kennung eine Kommunikation über das Request/Response-Prinzip kennzeichnet, sodass durch Auswertung der ReqResp-Kennung einfach entschieden werden kann, ob es sich auf eine Nachricht handelt, mit der das Request/Response-Prinzip realisiert wird oder eine "normale" Nachricht des originären Publish/Subscribe-Kommunikationsprinzips. Hierdurch kann sehr einfach eine Unterscheidung zwischen normalen Publish/Subscribe-Nachrichten und Request/Response-Nachrichten, die mit Mitteln der Publish/Subscribe-Prinzips realisiert worden sind, getroffen werden, was zum Beispiel beim Debuggen der Kommunikationsimplementierung hilfreich sein kann.

Bei einer anderen vorteilhaften Ausgestaltung von Verfahren und Kommunikationssystem ist realisiert, dass das antwortende Feldgerät Anfrage-Nachrichten abonniert, deren Nachrichtentitel zusätzlich eine Protokoll-Kennung aufweisen, dass das anfragende Feldgerät Antwort-Nachrichten abonniert, deren Nachrichtentitel zusätzlich die Protokoll-Kennung aufweisen, dass das anfragende Feldgerät eine Anfrage-Nachricht an den Datenbroker versendet, wobei der Nachrichtentitel der Anfrage-Nachricht zusätzlich die Protokoll-Kennung aufweist, dass das antwortende Feldgerät die Antwort-Nachricht an den Datenbroker versendet, wobei der Nachrichtentitel der Antwort-Nachricht zusätzlich die Protokoll-Kennung aufweist, wobei die Protokoll-Kennung angibt, welche Kommunikationsprotokolle von einem abonnierenden Feldgerät verstanden werden und in welchem Protokoll ein sendendes Feldgerät Nachrichteninhalte versendet. Dies ermöglicht die zielgerichtete Interpretation eines Nachrichteninhaltes, insbesondere wenn verschiedene Nachrichten verschiedener Protokolle übermittelt und verarbeitet können werden sollen.

Eine Weiterbildung des Verfahrens und des Kommunikationssystems ist gerichtet auf die Frage, wie die eindeutige Feldgerätekennung des antwortenden Feldgerätes dem anfragenden Feldgerät bekannt gemacht wird. Dies geschieht bevorzugt dadurch, dass wenigstens ein Feldgerät mit einer eindeutigen Feldgerätekennung eine Anmelde-Nachricht mit einem Anmelde-Nachrichtentitel an den Datenbroker sendet, wobei der Anmelde-Nachrichtentitel eine allgemeine Anmeldekennung und die eindeutige Feldgerätekennung des Feldgeräts umfasst. Der Datenbroker speichert die wenigstens eine Anmelde-Nachricht. Für den Fall, dass ein anderes Feldgerät Nachrichten mit der allgemeinen Anmeldekennung im Nachrichtentitel abonniert, versendet der Datenbroker die wenigstens eine gespeicherte Anmelde-Nachricht an das Anmelde-Nachrichten abonnierende Feldgerät. Das Anmelde-Nachrichten abonnierende Feldgerät erhält dann durch Auswertung der Anmelde-Nachrichtentitel der empfangenen Anmelde-Nachrichten eine Übersicht über die teilnehmenden Feldgeräte. Vorzugsweise wird also der Datenbroker als zentrale Anmeldestelle für die beteiligten Feldgeräte verwendet, mit der Option, die Anmeldedaten, also die Feldgerätekennungen der jeweiligen Feldgeräte, auch den anderen Feldgeräten bekannt zu machen. Denkbar wäre es auch, entsprechende Informationen bei Einrichtung der miteinander in Kommunikation stehenden Feldgeräte auf die Feldgeräte zu bringen, beispielsweise mit einem externen Servicegerät, das mit jedem Feldgerät verbunden wird. Dies ist aber erheblich aufwendiger, mag aber bestimmten Sicherheitsüberlegungen eher gerecht werden.

Im Zusammenhang mit der zuvor geschilderten Verteilung der Feldgerätekennungen besteht eine bevorzugte Ausgestaltung des Verfahrens und des Kommunikationssystems darin, dass bei Anschluss eines Feldgerätes mit einer eindeutigen Feldgerätekennung an den Datenbroker das Feldgerät automatisch eine Anmelde-Nachricht an den Datenbroker sendet und/oder dass bei Anschluss eines Feldgerätes mit einer eindeutigen Feldgerätekennung an den Datenbroker das Feldgerät automatisch Nachrichten mit der allgemeinen Anmeldekennung im Nachrichtentitel abonniert.

Eine weitere Weiterbildung des Anmeldevorgangs sieht vor, dass der Anmelde-Nachrichtentitel der Anmelde-Nachricht zusätzlich eine Angabe zum Feldgerätetyp und/oder zum Feldgerätehersteller und/oder zum Feldgeräteprotokoll umfasst.

Bei einer bevorzugten praktischen Umsetzung des zuvor beschriebenen Verfahrens und des zuvor beschriebenen Kommunikationssystems ist die Brokerfunktionalität des Datenbrokers und die auf dem Publish-Subscribe-Prinzip beruhende Kommunikationsverbindung mit dem MQTT-Protokoll (Message Queue Telemetry Transport Protokoll) realisiert. Insbesondere werden die Anmelde-Nachrichten als retained messages realisiert, also als MQTT-Nachrichten mit gesetztem Retain-Flag, sodass die Anmelde-Nachrichten persistent auf dem Datenbroker gespeichert werden. Dadurch ist gewährleistet, dass ausgetauschte oder gänzlich neu hinzutretende Feldgeräte alle Anmelde-Nachrichten vollständig erhalten, wenn sie mit dem Datenbroker neu in Verbindung treten.

Die bevorzugten Ausgestaltungen und Weiterbildungen des Verfahrens und des Kommunikationssystems lassen sich in Zusammenhang mit der jeweils erfindungsgemäßen Ausgestaltung gemäß den unabhängigen Ansprüchen jede für sich einzeln realisieren oder aber auch in beliebiger Kombination miteinander, es sei denn, eine bevorzugte Ausgestaltung ist ausdrücklich nur in Zusammenhang mit einer anderen bevorzugten Ausgestaltung beschrieben worden.

Im Einzelnen gibt es nun verschiedene Möglichkeiten, das erfindungsgemä-ße Verfahren zum Austausch von Daten zwischen mehreren Feldgeräten und das Kommunikationssystem mit mehreren Feldgeräten und wenigstens einem Datenbroker mit einer Brokerfunktionalität auszugestalten und weiterzubilden. Dazu wird verwiesen auf die den unabhängigen Patentansprüchen nachgeordneten Patentansprüche und auf die Beschreibung bevorzugter Ausführungsbeispiele in Verbindung mit der Zeichnung. In der Zeichnung zeigen:
- Fig. 1: ein Verfahren zum Austausch von Daten zwischen mehreren Feldgeräten und ein Kommunikationssystem mit mehreren Feldgeräten und wenigstens einem Datenbroker mit einer Brokerfunktionalität,
- Fig. 2: eine Ausgestaltung des Verfahrens und des Kommunikationssystems, wobei die Angabe zur Feldgerätekennung die Feldgerätekennung selbst ist,
- Fig. 3: eine Ausgestaltung des Verfahrens und des Kommunikationssystems, wobei im Nachrichtentitel die Angabe zur Feldgerätekennung verwendet wird,
- Fig. 4: eine Ausgestaltung des Verfahrens und des Kommunikationssystems, wobei im Nachrichtentitel eine Request/ResponseKennung verwendet wird,
- Fig. 5: eine Ausgestaltung des Verfahrens und des Kommunikationssystems, wobei im Nachrichtentitel eine ReqResp-Kennung verwendet wird,
- Fig. 6: eine Ausgestaltung des Verfahrens und des Kommunikationssystems, wobei im Nachrichtentitel eine Protokoll-Kennung verwendet wird,
- Fig. 7: eine Ausgestaltung des Verfahrens und des Kommunikationssystems unter Verwendung einer Anmelde-Nachricht und
- Fig. 8: eine Ausgestaltung des Verfahrens und des Kommunikationssystems, wobei mehrere Teilnehmer Anmelde-Nachrichten verschicken und empfangen.

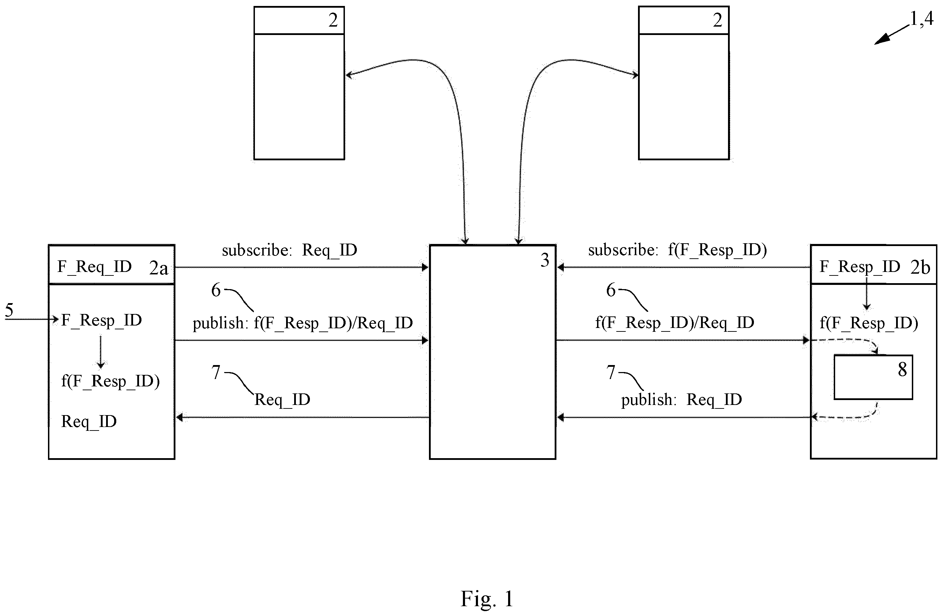

In den Fig. 1 bis 8 sind dem Prinzip nach und in verschiedenen Ausgestaltungen jeweils dargestellt ein Verfahren 1 zum Austausch von Daten zwischen mehreren Feldgeräten 2, 2a, 2b, wobei die Feldgeräte 2, 2a, 2b über einen Datenbroker 3 mit einer Brokerfunktionalität in einer auf dem Publish-Subscribe-Prinzip beruhenden Kommunikationsverbindung stehen, sowie ein Kommunikationssystem 4 mit mehreren Feldgeräten 2, 2a, 2b und einem Datenbroker 3 mit einer Brokerfunktionalität, wobei zum Austausch von Daten zwischen mehreren Feldgeräten 2, 2a, 2b die Feldgeräte 2, 2a, 2b über den Datenbroker 3 in einer auf dem Publish-Subscribe-Prinzip beruhenden Kommunikationsverbindung stehen. Die Figuren weisen verschiedene textuelle Angaben auf, ohne die die Figuren nur schwer verständlich wären, sie können deshalb auch als sprechende Bezugszeichen aufgefasst werden. Diese textuellen Angaben werden hier im Beschreibungstext in Klammern wiedergegeben, um eine gut lesbare Abgrenzung zum Beschreibungstext zu gewährleisten.

Allgemein bewirkt die auf dem Publish-Subscribe-Prinzip beruhende Kommunikationsverbindung, dass ein Feldgerät 2 wenigstens eine Nachricht mit einem Nachrichtentitel an den Datenbroker 3 sendet (publish), wobei wenigstens ein Feldgerät 2 eine Nachricht mit zumindest einem bestimmten Bestandteil eines Nachrichtentitels bei dem Datenbroker 3 abonniert (subscribe). Die an den Datenbroker 3 gesendete Nachricht wird von dem Datenbroker 3 empfangen und der Datenbroker 3 leitet die empfangene Nachricht an das wenigstens eine Feldgerät 2 weiter, welches Feldgerät 2 die Nachricht mit entsprechendem Bestandteil des Nachrichtentitels bei dem Datenbroker 3 abonniert (subscribe) hat. In den Figuren ist das versenden von Nachrichten und Anweisungen grafisch durch Pfeile gekennzeichnet, die die Richtung des Informationstransportes anzeigen.

Die auf dem Publish-Subscribe-Prinzip beruhende Kommunikationsverbindung ermöglicht es nicht, dass ein Feldgerät 2 bedarfsweise von einem anderen Feldgerät 2 eine Information abruft. Dies ist prinzipiell nicht vorgesehen, es werden immer nur - unabhängig vom Informationsbedarf eines teilnehmenden Feldgeräts 2 - Nachrichten an die Abonnenten weitergeleitet, wenn diese Nachrichten aktiv von dem betreffenden Feldgerät 2 erzeugt und veröffentlicht, also dem Datenbroker 3 zugesendet werden.

Die in den Fig. 1 bis 8 dargestellten Ausgestaltungen der Verfahren 1 und Kommunikationssysteme 4 zeigen eine Möglichkeit auf, wie mit den Mitteln des Publish-Subscribe-Prinzips doch eine Kommunikation zwischen den Feldgeräten 2 realisierbar ist, bei der Informationen von teilnehmenden Feldgeräten 2 bei anderen Feldgeräten 2 abgerufen werden können.

Allen Ausgestaltungen in den Fig. 1 bis 8 ist gemein, dass ein auf dem Request-Response-Prinzip beruhender Austausch von Daten zwischen einem anfragenden Feldgerät 2a und einem antwortenden Feldgerät 2b mit den Mitteln des Publish-Subscribe-Prinzips dadurch implementiert wird, dass eine eindeutige Feldgerätekennung (F Resp ID) des antwortenden Feldgerätes 2b zumindest dem anfragenden Feldgerät 2a bekannt gemacht wird 5. Die beiden weiteren Feldgeräte 2, die jeweils oben in den Figuren dargestellt sind, verdeutlichen lediglich, dass selbstverständlich weitaus mehr Feldgeräte 2 mit dem Datenbroker 3 verbunden sein können als das anfragende Feldgerät 2a und das antwortende Feldgerät 2b, anhand derer das Funktionsprinzip der neuartigen Realisierung der Kommunikation erläutert wird.

Das antwortende Feldgerät 2b abonniert (subscribe: f(F_Resp_ID)) Anfrage-Nachrichten 6, deren Nachrichtentitel eine Angabe (f(F _Resp_ID)) zur Feldgerätekennung F_Resp_ID des antwortenden Feldgerätes 2b umfasst. Damit eröffnet das antwortende Feldgerät 2b praktisch einen Kommunikationskanal, über den es mit Anfragen direkt angesprochen werden kann.

Das anfragende Feldgerät 2a abonniert (subscribe: Req_ID) Antwort-Nachrichten 7, deren Nachrichtentitel eine dem anfragenden Feldgerät 2a bekannte Anfrage-Kennung (Req_ID) umfasst. Damit eröffnet das anfragende Feldgerät 2a praktisch einen Kommunikationskanal, über den es von ihm selbst angeforderte Antworten direkt empfangen kann.

Das anfragende Feldgerät 2a versendet (publish: f(F_Resp_ID)/Req_ID) eine Anfrage-Nachricht 6 an den Datenbroker 3, wobei der Nachrichtentitel der Anfrage-Nachricht 6 die Anfrage-Kennung (Req_ID) und die Angabe (f(F_Resp_ID)) zur Feldgerätekennung F Resp ID des antwortenden Feldgerätes 2b umfasst.

Aufgrund des Abonnements der Anfrage-Nachrichten 6 erhält das antwortende Feldgerät 2b die Anfrage-Nachricht 6 des anfragenden Feldgerätes 2a. Das antwortende Feldgerät 2b wertet die Anfrage-Nachricht 6 aus 8 und versendet (publish: Req_ID) eine entsprechende Antwort-Nachricht 7 an den Datenbroker 3, wobei der Nachrichtentitel der Antwort-Nachricht 7 zumindest die Anfrage-Kennung Req_ID umfasst.

Aufgrund des Abonnements der Antwort-Nachrichten 7 erhält das anfragende Feldgerät 2a die Antwort-Nachricht 7 des antwortenden Feldgerätes 2b.

In den Figuren ist zu den Nachrichten bzw. Anweisungen immer nur der Nachrichtentitel angegeben, wobei verschiedene Bestandteile eines Nachrichtentitels durch einen Schrägstrich "/" voneinander getrennt sind. In ähnlicher Weise werden Nachrichtentitel im MQTT-Protokoll hierarchisch gegliedert, wobei die in den Figuren dargestellten Nachrichtentitel und/oder Anweisungen in Strenge nicht der Syntax des MQTT-Protokoll entsprechen, sondern als in Pseudocode verfasst zu verstehen sind. Wenn die Syntax des MQTT-Protokolls verwendet worden wäre, müsste beispielsweise das Abonnement des antwortenden Feldgerätes 2b stets mit der allgemeinen Platzhalterangabe "/#" enden, um der MQTT-Syntax nach zum Ausdruck zu bringen, dass nachfolgende Bestandteile des Nachrichtentitels unerheblich sind, darauf soll es hier aber nicht ankommen.

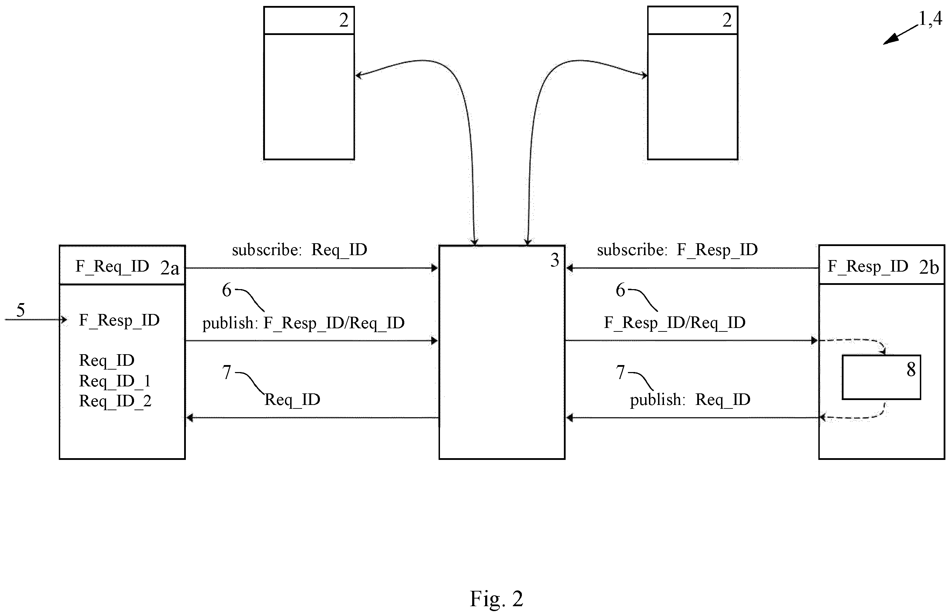

In Fig. 1 ist dargestellt, dass aus der dem anfragenden Feldgerät 2a bekannt gemachte 5 eindeutige Feldgerätekennung F_Resp_ID des antwortenden Feldgerätes 2b eine eindeutige Angabe f(F _Resp_ID) zur Feldgerätekennung F_Resp_ID des antwortenden Feldgerätes 2b abgeleitet wird. Dies kann beispielsweise durch einen Algorithmus geschehen, der auf allen beteiligten Feldgeräten 2, 2a, 2b identisch ist. Dadurch kann beispielsweise sichergestellt werden, dass nur ausdrücklich für das konkrete Kommunikationssystem 4 vorgesehene Feldgeräte 2, 2a, 2b in das Kommunikationssystem 4 eingebaut werden können. Im einfachsten Fall ist die eindeutige Angabe f(F_Resp_ID) zur Feldgerätekennung F Resp ID des antwortenden Feldgerätes 2b einfach die Feldgerätekennung F Resp ID des antwortenden Feldgerätes 2b selbst (die Funktion f() besteht also einfach in der Identität); dies ist beispielhaft in Fig. 2 dargestellt.

In den in den Fig. 1 bis 8 dargestellten Ausführungsbeispielen für das Verfahren 1 und das Kommunikationssystem 4 ist die Anfrage-Kennung Req_ID ein eindeutiges Identifizierungszeichen für jede einzelne Anfrage. In Fig. 2 ist beispielhaft dargestellt, dass das anfragende Feldgerät 2a über mehrere Anfrage-Kennungen Req_ID, Req_ID_1, Req_ID_2 verfügt.

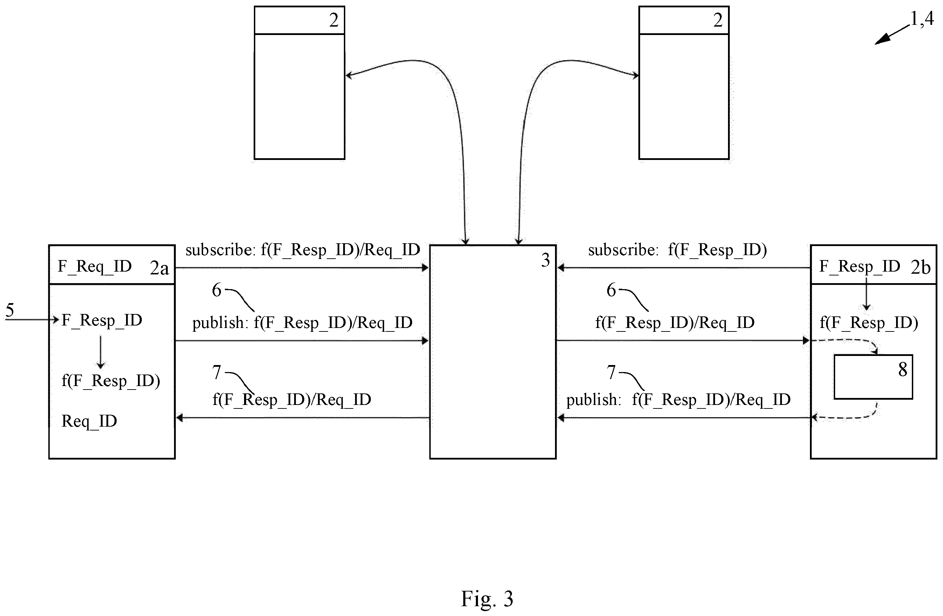

In Fig. 3 ist dargestellt, dass das anfragende Feldgerät 2a Antwort-Nachrichten 7 abonniert (subscribe: f(F_Resp_ID)/Req_ID), deren Nachrichtentitel zusätzlich die Angabe (f(F_Resp_ID)) zur Feldgerätekennung (F Resp ID) des antwortenden Feldgerätes 2b umfasst, und dass der Nachrichtentitel der Antwort-Nachricht 7 zusätzlich die Angabe (f(F_Resp_ID)) zur Feldgerätekennung (F_Resp_ID) des antwortenden Feldgerätes 2b umfasst.

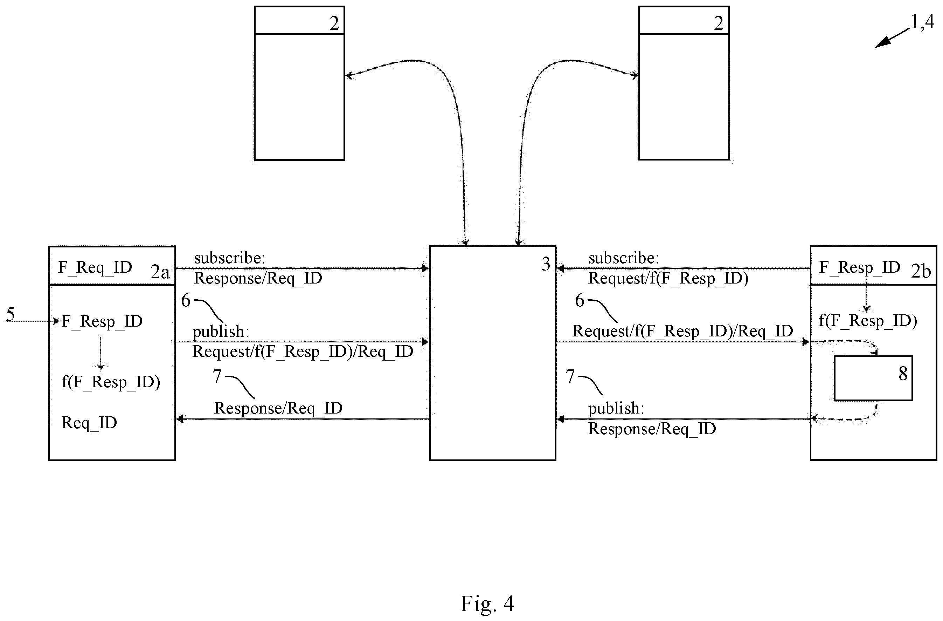

Bei dem Ausführungsbeispiel gemäß Fig. 4 ist vorgesehen, dass das antwortende Feldgerät 2b Anfrage-Nachrichten 6 abonniert (subscribe: Request/f(F _Resp_ID)), deren Nachrichtentitel zusätzlich eine Request/Response-Kennung aufweisen, und dass das anfragende Feldgerät 2a Antwort-Nachrichten 7 abonniert (subscribe: Response/Req ID), deren Nachrichtentitel zusätzlich eine Request/Response-Kennung aufweisen. Das anfragende Feldgerät 2a versendet (publish: Request/f(F_Resp_ID)/Req_ID) eine Anfrage-Nachricht 6 an den Datenbroker 3, wobei der Nachrichtentitel der Anfrage-Nachricht 6 zusätzlich eine Request/Response-Kennung aufweist. Das antwortende Feldgerät 2b versendet (publish: Response/Req_ID) die Antwort-Nachricht 7 an den Datenbroker 3 , wobei der Nachrichtentitel der Antwort-Nachricht 7 zusätzlich eine Request/Response-Kennung aufweist. Die Request/Response-Kennung kennzeichnet dabei entweder eine Anfrage (in Fig. 4 durch "Request") oder eine Antwort (in Fig. 4 durch "Response"), sodass durch Auswertung der Request/Response-Kennung von dem empfangenden Feldgerät 2b entschieden werden kann, ob es sich um eine Anfrage oder um eine Antwort auf eine Anfrage handelt.

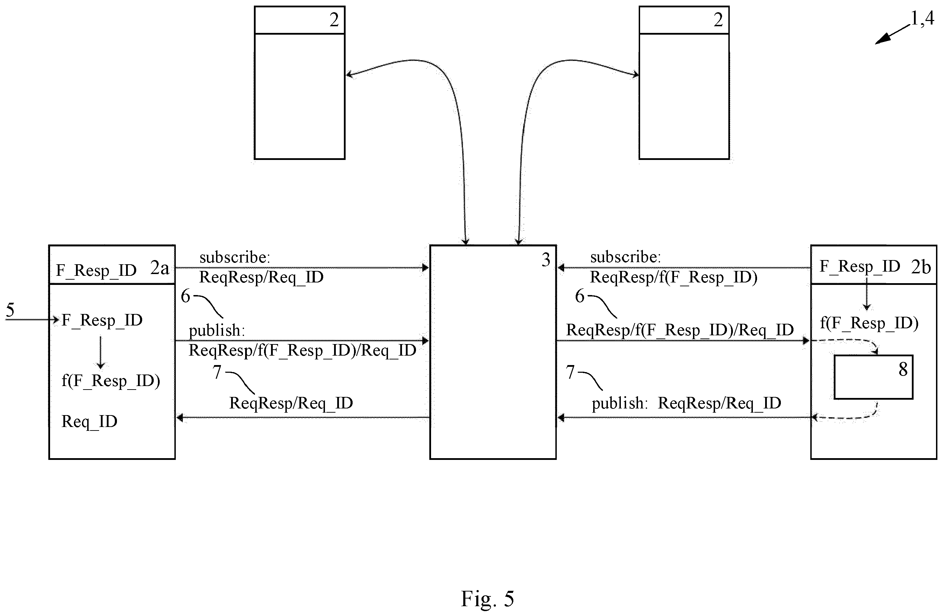

Die zuvor anhand Fig. 4 dargestellte Request/Response-Kennung darf nicht verwechselt werden mit der in Fig. 5 zur Anwendung kommenden Req/Resp-Kennung, die einem gänzlich anderen Zweck dient. Das Verfahren 1 und das Kommunikationssystem 4 gemäß Fig. 5 zeichnen sich dadurch aus, dass das antwortende Feldgerät 2b Anfrage-Nachrichten 6 abonniert (subscribe: ReqResp/f(F _Resp_ID)), deren Nachrichtentitel zusätzlich eine ReqResp-Kennung ReqResp aufweisen, und dass das anfragende Feldgerät 2a Antwort-Nachrichten abonniert (subscribe: ReqResp/Req_ID), deren Nachrichtentitel zusätzlich die ReqResp-Kennung ReqResp aufweisen. Das anfragende Feldgerät 2a versendet (publish: ReqResp/f(F_Resp_ID)/Req_ID) eine Anfrage-Nachricht 6 an den Datenbroker 3 , wobei der Nachrichtentitel der Anfrage-Nachricht 6 zusätzlich die ReqResp-Kennung ReqResp aufweist. Das antwortende Feldgerät 2b versendet (publish: ReqResp/Req_ID) die Antwort-Nachricht 7 an den Datenbroker 3, wobei der Nachrichtentitel der Antwort-Nachricht 7 zusätzlich die ReqResp-Kennung ReqResp aufweist, wobei die ReqResp-Kennung ReqResp eine Kommunikation über das Request/Response-Prinzip kennzeichnet, sodass durch Auswertung der ReqResp-Kennung ReqResp einfach entschieden werden kann, ob es sich auf eine Nachricht handelt, mit der das Request/Response-Prinzip realisiert wird, oder um eine "normale" Nachricht nach dem Publish-Subscribe-Prinzip.

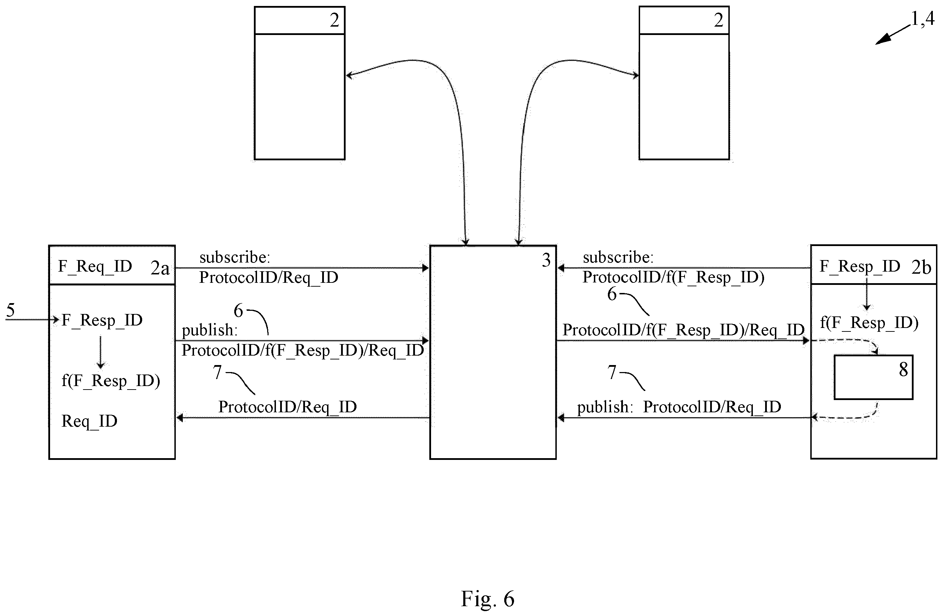

Das Ausführungsbeispiel gemäß Fig. 6 ermöglicht es mitzuteilen, gemäß welchem Übertragungs- bzw. Nachrichtenprotokoll eine Nachricht formuliert ist bzw. formuliert werden soll, was es dem empfangenden Feldgerät 2, 2a, 2b ermöglicht, die Nachricht zielgerichtet zu interpretieren oder dem sendenden Feldgerät 2, 2a, 2b ermöglicht, die Nachricht zielgerichtet zu verfassen. Dazu ist vorgesehen, dass das antwortende Feldgerät 2b Anfrage-Nachrichten 6 abonniert (subscribe: ProtocoID/f(F_Resp_ID)), deren Nachrichtentitel zusätzlich eine Protokoll-Kennung ProtocolD aufweisen, dass das anfragende Feldgerät 2a Antwort-Nachrichten 7 abonniert (subscribe: ProtocolID/Req_ID), deren Nachrichtentitel zusätzlich die Protokoll-Kennung (ProtocolID) aufweisen, dass das anfragende Feldgerät 2a eine Anfrage-Nachricht an den Datenbroker 3 versendet (publish: ProtocolID/f(F_Resp_ID)/Req_ID), wobei der Nachrichtentitel der Anfrage-Nachricht 6 zusätzlich die Protokoll-Kennung ProtocolID aufweist, dass das antwortende Feldgerät 2b die Antwort-Nachricht 7 an den Datenbroker 3 versendet (publish: ProtocolID/Req_ID), wobei der Nachrichtentitel der Antwort-Nachricht 7 zusätzlich die Protokoll-Kennung ProtocolID aufweist, wobei die Protokoll-Kennung ProtocolID angibt, welche Kommunikationsprotokolle von einem abonnierenden Feldgerät 2, 2a, 2b verstanden werden und in welchem Protokoll ein sendendes Feldgerät 2, 2a, 1b Nachrichteninhalte versendet. Die ProtocolID kann beispielsweise verschiedene Protokolle durch Zahlenwerte codieren (ProtocolID=1 --> internes Protokoll 1; ProtocolID=2 --> internes Protokoll 2; ProtocolID=3 --> MODBUS; ProtocolID=4 --> HART).

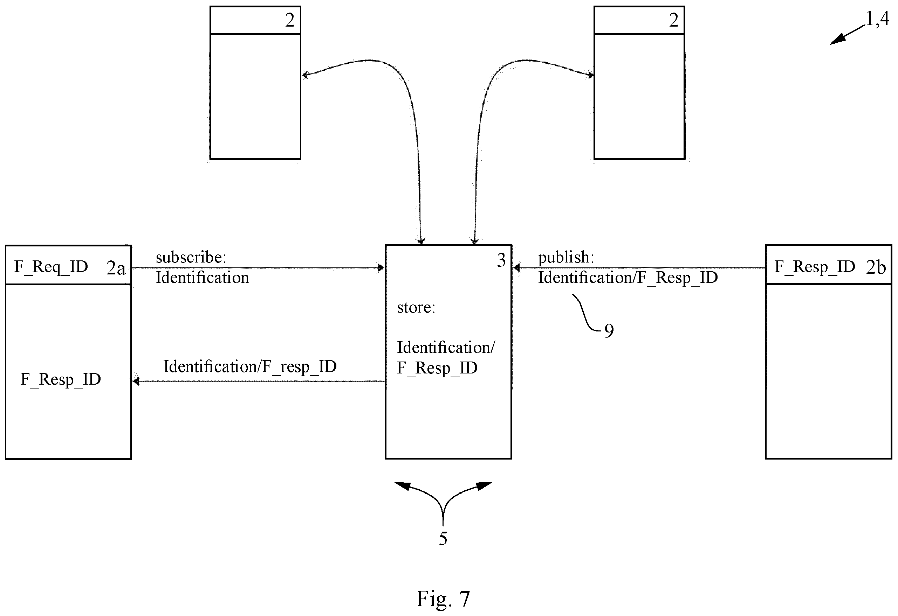

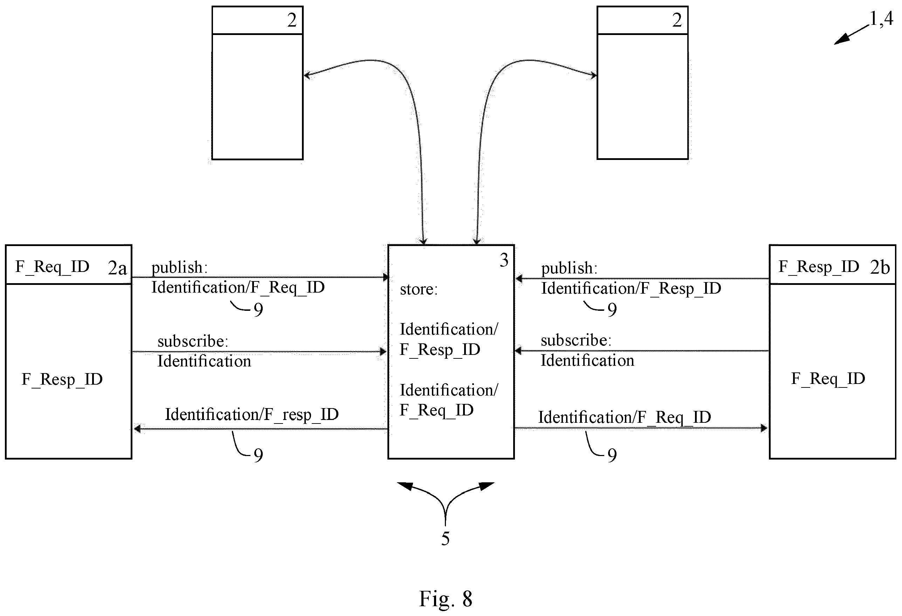

Anhand der Fig. 7 und 8 sind Ausgestaltungen des Verfahrens 1 und des Kommunikationssystems 4 dargestellt, die einen bevorzugten Anmeldevorgang von Feldgeräten 2, 2a, 2b und die Verteilung von Anmeldeinformationen - Bekanntmachen 5 der Feldgerätekennungen - zum Gegenstand haben. Dazu ist realisiert, dass wenigstens ein Feldgerät 2a, 2b mit einer eindeutigen Feldgerätekennung F_Req_ID, F_Resp_ID eine Anmelde-Nachricht 9 mit einem Anmelde-Nachrichtentitel an den Datenbroker 3 sendet (publish: Identification/F_Resp_ID; publish: Identification/F_Req_ID), wobei der Anmelde-Nachrichtentitel eine allgemeine Anmeldekennung Identification und die eindeutige Feldgerätekennung (F_Resp_ID; F_Req_ID) des Feldgeräts 2, 2a, 2b umfasst. Der Datenbroker 3 speichert (store) die wenigstens eine Anmelde-Nachricht 9. Für den Fall, dass ein anderes Feldgerät 2, 2a, 2b Nachrichten mit der allgemeinen Anmeldekennung Identification im Nachrichtentitel abonniert, versendet der Datenbroker 3 die wenigstens eine gespeicherte Anmelde-Nachricht 9 an das Anmelde-Nachrichten 9 abonnierende Feldgerät 2, 2a, 2b, und das Anmelde-Nachrichten 9 abonnierende Feldgerät 2, 2a, 2b erhält durch Auswertung der Anmelde-Nachrichtentitel der empfangenen Anmelde-Nachrichten 9 eine Übersicht über die teilnehmenden Feldgeräte.

Die in den Figuren dargestellten verfahren 1 und Kommunikationssysteme sind so realisiert, dass bei Anschluss eines Feldgerätes 2, 2a, 2b mit einer eindeutigen Feldgerätekennung F Resp ID, F_Req_ID an den Datenbroker 3 das Feldgerät 2, 2a, 2b automatisch eine Anmelde-Nachricht 9 an den Datenbroker 3 sendet und dass bei Anschluss eines Feldgerätes 2, 2a, 2b mit einer eindeutigen Feldgerätekennung F_Resp_ID, F_Req_ID an den Datenbroker 3 das Feldgerät 2, 2a, 2b automatisch Nachrichten mit der allgemeinen Anmeldekennung Identification im Nachrichtentitel abonniert.

### Bezugszeichen

- 1: Verfahren zum Austausch von Daten
- 2: Feldgeräte
- 2a, 2b: anfragendes Feldgerät, antwortendes Feldgerät,
- 3: Datenbroker
- 4: Kommunikationssystem
- 5: Bekanntmachen der Feldgerätekennung des antwortenden Feldgerätes
- 6: Anfrage-Nachricht
- 7: Antwort-Nachricht
- 8: auswerten der Anfrage-Nachricht
- 9: Anmelde-Nachricht

- publish: Senden einer Nachricht an den Datenbroker
- subscribe: Abonnieren einer Nachricht mit einem Nachrichtentitel
- F_Req_ID: Feldgerätekennung des anfragenden Feldgeräts
- F_Resp_ID: Feldgerätekennung des antwortenden Feldgeräts
- f(F _Resp_ID): Angabe zur Feldgerätekennung des antwortenden Feldgeräts

## Patentansprüche

1. Verfahren (1) zum Austausch von Daten zwischen mehreren Feldgeräten (2, 2a, 2b), wobei die Feldgeräte (2, 2a, 2b) über einen Datenbroker (3) mit einer Brokerfunktionalität in einer auf dem Publish-Subscribe-Prinzip beruhenden Kommunikationsverbindung stehen, wobei wenigstens ein Feldgerät (2, 2a, 2b) wenigstens eine Nachricht mit einem Nachrichtentitel an den Datenbroker (3) sendet (publish), wobei wenigstens ein Feldgerät (2, 2a, 2b) eine Nachricht mit zumindest einem bestimmten Bestandteil eines Nachrichtentitels bei dem Datenbroker (3) abonniert (subscribe), wobei die an den Datenbroker (3) gesendete Nachricht von dem Datenbroker (3) empfangen wird und der Datenbroker (3) die empfangene Nachricht an das wenigstens eine Feldgerät (2) weiterleitet, welches Feldgerät (2) die Nachricht mit entsprechendem Bestandteil des Nachrichtentitels bei dem Datenbroker (3) abonniert hat (subscribe),
wobei ein auf dem Request-Response-Prinzip beruhender Austausch von Daten zwischen einem anfragenden Feldgerät (2a) und einem antwortenden Feldgerät (2b) mit den Mitteln des Publish-Subscribe-Prinzips dadurch implementiert wird, dass eine eindeutige Feldgerätekennung (F_Resp_lD) des antwortenden Feldgerätes (2b) zumindest dem anfragenden Feldgerät (2a) bekannt gemacht wird (5),
wobei das antwortende Feldgerät (2b) Anfrage-Nachrichten (6) abonniert (subscribe: f(F_Resp_ID)), deren Nachrichtentitel eine Angabe (f(F_Resp_ID)) zur Feldgerätekennung (F_Resp_ID) des antwortenden Feldgerätes (2b) umfasst,
wobei das anfragende Feldgerät (2a) Antwort-Nachrichten (7) abonniert (subscribe: Req_ID), deren Nachrichtentitel eine dem anfragenden Feldgerät (2a) bekannte Anfrage-Kennung (Req_ID) umfasst,
wobei das anfragende Feldgerät (2a) eine Anfrage-Nachricht (6) an den Datenbroker (3) versendet, wobei der Nachrichtentitel der Anfrage-Nachricht (6) die Anfrage-Kennung (Req_ID) und die Angabe (f(F_Resp_ID)) zur Feldgerätekennung (F_Resp_ID) des antwortenden Feldgerätes (2b) umfasst,
wobei das antwortende Feldgerät (2b) aufgrund des Abonnements der Anfrage-Nachrichten (6) die Anfrage-Nachricht (6) des anfragenden Feldgerätes (2a) erhält, die Anfrage-Nachricht (6) auswertet (8) und eine entsprechende Antwort-Nachricht (7) an den Datenbroker (3) versendet, wobei der Nachrichtentitel der Antwort-Nachricht (7) zumindest die Anfrage-Kennung (Req_ID) umfasst und
wobei das anfragende Feldgerät (2a) aufgrund des Abonnements der Antwort-Nachricht (7) die Antwort-Nachricht (7) des antwortenden Feldgerätes (2b) erhält.

2. Verfahren (1) nach Anspruch 1, **dadurch gekennzeichnet, dass** die Anfrage-Kennung (Req_ID) eine unveränderliche Angabe zur Feldgerätekennung (F _Req_ID) des anfragenden Feldgerätes (2a) ist oder ein eindeutiges Identifizierungszeichen für jede einzelne Anfrage.

3. Verfahren (1) nach Anspruch 1 oder 2, **dadurch gekennzeichnet, dass** das anfragende Feldgerät (2a) Antwort-Nachrichten (7) abonniert (subscribe: f(F_Resp_ID)/Req_ID), deren Nachrichtentitel zusätzlich die Angabe (f(F_Resp_ID)) zur Feldgerätekennung (F_Resp_ID) des antwortenden Feldgerätes (2b) umfasst, und dass der Nachrichtentitel der Antwort-Nachricht (7) zusätzlich die Angabe (f(F_Resp_ID)) zur Feldgerätekennung (F_Resp_ID) des antwortenden Feldgerätes (2b) umfasst.

4. Verfahren (1) nach einem der Ansprüche 1 bis 3, **dadurch gekennzeichnet, dass** das antwortende Feldgerät (2b) Anfrage-Nachrichten (6) abonniert (subscribe: Request/f(F_Resp_ID)), deren Nachrichtentitel zusätzlich eine Request/Response-Kennung aufweisen, dass das anfragende Feldgerät (2a) Antwort-Nachrichten (7) abonniert (subscribe: Response/Req_ID), deren Nachrichtentitel zusätzlich eine Request/Response-Kennung aufweisen, dass das anfragende Feldgerät (2a) eine Anfrage-Nachricht (6) an den Datenbroker (3) versendet (publish: Request/f(F_Resp_ID)/Req_ID), wobei der Nachrichtentitel der Anfrage-Nachricht (6) zusätzlich eine Request/Response-Kennung aufweist, dass das antwortende Feldgerät (2b) die Antwort-Nachricht (7) an den Datenbroker (3) versendet (publish: Response/Req_ID), wobei der Nachrichtentitel der Antwort-Nachricht (7) zusätzlich eine Request/Response-Kennung aufweist, wobei die Request/Response-Kennung entweder eine Anfrage kennzeichnet (Request) oder eine Antwort kennzeichnet (Response), sodass durch Auswertung der Request/Response-Kennung von einem empfangenden Feldgerät (2, 2a, 2b) entschieden werden kann, ob es sich um eine Anfrage oder um eine Antwort auf eine Anfrage handelt.

5. Verfahren (1) nach einem der Ansprüche 1 bis 4, **dadurch gekennzeichnet, dass** das antwortende Feldgerät (2b) Anfrage-Nachrichten (6) abonniert (subscribe: ReqResp/f(F_Resp_ID)), deren Nachrichtentitel zusätzlich eine ReqResp-Kennung (ReqResp) aufweisen, dass das anfragende Feldgerät (2a) Antwort-Nachrichten abonniert (subscribe: ReqResp/Req_ID), deren Nachrichtentitel zusätzlich die ReqResp-Kennung (ReqResp) aufweisen, dass das anfragende Feldgerät (2a) eine Anfrage-Nachricht (6) an den Datenbroker (3) versendet (publish: ReqResp/f(F_Resp_ID)/Req_ID), wobei der Nachrichtentitel der Anfrage-Nachricht (6) zusätzlich die ReqResp-Kennung (ReqResp) aufweist, dass das antwortende Feldgerät (2b) die Antwort-Nachricht (7) an den Datenbroker (3) versendet (publish: ReqResp/Req_ID), wobei der Nachrichtentitel der Antwort-Nachricht (7) zusätzlich die ReqResp-Kennung (ReqResp) aufweist, wobei die ReqResp-Kennung (ReqResp) eine Kommunikation über das Request/Response-Prinzip kennzeichnet, sodass durch Auswertung der ReqResp-Kennung (ReqResp) einfach entschieden werden kann, ob es sich auf eine Nachricht handelt, mit der das Request/Response-Prinzip realisiert wird.

6. Verfahren (1) nach einem der Ansprüche 1 bis 5, **dadurch gekennzeichnet, dass** das antwortende Feldgerät (2b) Anfrage-Nachrichten (6) abonniert (subscribe: ProtocolID/f(F_Resp_ID)), deren Nachrichtentitel zusätzlich eine Protokoll-Kennung (ProtocolID) aufweisen, dass das anfragende Feldgerät (2a) Antwort-Nachrichten (7) abonniert (subscribe: Protoco-HD/Req_ID), deren Nachrichtentitel zusätzlich die Protokoll-Kennung (ProtocolID) aufweisen, dass das anfragende Feldgerät (2a) eine Anfrage-Nachricht an den Datenbroker (3) versendet (publish: Protoco-IID/f(F_Resp_ID)/Req_ID), wobei der Nachrichtentitel der Anfrage-Nachricht (6) zusätzlich die Protokoll-Kennung (ProtocolID) aufweist, dass das antwortende Feldgerät (2b) die Antwort-Nachricht (7) an den Datenbroker (3) versendet (publish: ProtocolID/Req_ID), wobei der Nachrichtentitel der Antwort-Nachricht (7) zusätzlich die Protokoll-Kennung (ProtocolID) aufweist, wobei die Protokoll-Kennung (ProtocolID) angibt, welche Kommunikationsprotokolle von einem abonnierenden Feldgerät (2, 2a, 2b) verstanden werden und in welchem Protokoll ein sendendes Feldgerät (2, 2a, 2b) Nachrichteninhalte versendet.

7. Verfahren (1) nach einem der Ansprüche 1 bis 6, **dadurch gekennzeichnet, dass** wenigstens ein Feldgerät (2, 2a, 2b) mit einer eindeutigen Feldgerätekennung (F_Req_ID, F__Resp_ID) eine Anmelde-Nachricht (9) mit einem Anmelde-Nachrichtentitel an den Datenbroker (3) sendet (publish: Identification/F_Resp_ID; publish: Identification/F_Req_ID), wobei der Anmelde-Nachrichtentitel eine allgemeine Anmeldekennung (Identification) und die eindeutige Feldgerätekennung (F_Resp_ID; F_Req_ID) des Feldgeräts (2, 2a, 2b) umfasst, dass der Datenbroker (3) die wenigstens eine Anmelde-Nachricht (9) speichert und dass für den Fall, dass ein anderes Feldgerät (2, 2a, 2b) Nachrichten mit der allgemeinen Anmeldekennung (Identification) im Nachrichtentitel abonniert, der Datenbroker (3) die wenigstens eine gespeicherte Anmelde-Nachricht (9) an das Anmelde-Nachrichten (9) abonnierende Feldgerät (2, 2a, 2b) versendet, und das Anmelde-Nachrichten (9) abonnierende Feldgerät (2, 2a, 2b) durch Auswertung der Anmelde-Nachrichtentitel der empfangenen Anmelde-Nachrichten (9) eine Übersicht über die teilnehmenden Feldgeräte (2, 2a, 2b) erhält.

8. Verfahren (1) nach Anspruch 7, **dadurch gekennzeichnet, dass** bei Anschluss eines Feldgerätes (2, 2a, 2b) mit einer eindeutigen Feldgerätekennung (F_Resp_ID; F_Req_ID) an den Datenbroker (3) das Feldgerät (2, 2a, 2b) automatisch eine Anmelde-Nachricht (9) an den Datenbroker (3) sendet und/oder dass bei Anschluss eines Feldgerätes (2, 2a, 2b) mit einer eindeutigen Feldgerätekennung (F_Resp_ID; F_Req_ID) an den Datenbroker (3) das Feldgerät (2, 2a, 2b) automatisch Nachrichten mit der allgemeinen Anmeldekennung (Identification) im Nachrichtentitel abonniert.

9. Verfahren (1) nach Anspruch 7 oder 8, **dadurch gekennzeichnet, dass** der Anmelde-Nachrichtentitel der Anmelde-Nachricht (9) zusätzlich eine Angabe zum Feldgerätetyp und/oder zum Feldgerätehersteller und/oder zum Feldgeräteprotokoll umfasst.

10. Verfahren (1) nach einem der Ansprüche 1 bis 9, **dadurch gekennzeichnet, dass** die Brokerfunktionalität des Datenbrokers (3) und die auf dem Publish-Subscribe-Prinzip beruhende Kommunikationsverbindung auf dem MQTT-Protokoll (Message Queue Telemetry Transport Protokoll) beruhen.

11. Kommunikationssystem (4) mit mehreren Feldgeräten (2, 2a, 2b) und wenigstens einem Datenbroker (3) mit einer Brokerfunktionalität, wobei zum Austausch von Daten zwischen mehreren Feldgeräten (2, 2a, 2b) die Feldgeräte (2, 2a, 2b) über den Datenbroker (3) in einer auf dem Publish-Subscribe-Prinzip beruhenden Kommunikationsverbindung stehen, wobei im Betrieb des Kommunikationssystems (4) wenigstens ein Feldgerät (2, 2a, 2b) wenigstens eine Nachricht mit einem Nachrichtentitel an den Datenbroker (3) sendet (publish), wobei wenigstens ein Feldgerät (2, 2a, 2b) eine Nachricht mit zumindest einem bestimmten Bestandteil eines Nachrichtentitels bei dem Datenbroker (3) abonniert (subscribe), wobei die an den Datenbroker (3) gesendete Nachricht von dem Datenbroker (3) empfangen wird und der Datenbroker (3) die empfangene Nachricht an das wenigstens eine Feldgerät (2, 2a, 2b) weiterleitet, welches Feldgerät (2, 2a, 2b) die Nachricht mit entsprechendem Bestandteil des Nachrichtentitels bei dem Datenbroker (3) abonniert hat,
wobei die Feldgeräte (2, 2a, 2b) und der Datenbroker (3) so eingerichtet sind, dass im Betrieb des Kommunikationssystems ein auf dem Request-Response-Prinzip beruhender Austausch von Daten zwischen einem anfragenden Feldgerät (2a) und einem antwortenden Feldgerät (2b) mit den Mitteln des Publish-Subscribe-Prinzips dadurch implementiert wird, dass eine eindeutige Feldgerätekennung (F_Resp_ID) des antwortenden Feldgerätes (2b) zumindest dem anfragenden Feldgerät (2) bekannt gemacht wird (5),
wobei das antwortende Feldgerät (2b) Anfrage-Nachrichten (6) abonniert (subscribe: f(F_Resp_ID)), deren Nachrichtentitel eine Angabe (f(F_Resp_ID)) zur Feldgerätekennung (F_Resp_ID) des antwortenden Feldgerätes (2b) umfasst,
wobei das anfragende Feldgerät (2a) Antwort-Nachrichten (7) abonniert (subscribe: Req_ID), deren Nachrichtentitel eine dem anfragenden Feldgerät (2a) bekannte Anfrage-Kennung (Req_ID) umfasst,
wobei das anfragende Feldgerät (2a) eine Anfrage-Nachricht (6) an den Datenbroker (3) versendet, wobei der Nachrichtentitel der Anfrage-Nachricht (6) die Anfrage-Kennung (Req_ID) und die Angabe (f(F_Resp_ID)) zur Feldgerätekennung (F_Resp_ID) des antwortenden Feldgerätes (2b) umfasst,
wobei das antwortende Feldgerät (2b) aufgrund des Abonnements der Anfrage-Nachrichten (6) die Anfrage-Nachricht (6) des anfragenden Feldgerätes (2a) erhält, die Anfrage-Nachricht (6) auswertet (8) und eine entsprechende Antwort-Nachricht (7) an den Datenbroker (3) versendet, wobei der Nachrichtentitel der Antwort-Nachricht (7) zumindest die Anfrage-Kennung (Req_ID) umfasst und
wobei das anfragende Feldgerät (2a) aufgrund des Abonnements der Antwort-Nachricht (7) die Antwort-Nachricht (7) des antwortenden Feldgerätes (2b) erhält.

12. Kommunikationssystem (4) nach Anspruch 11, **dadurch gekennzeichnet, dass** die Feldgeräte (2, 2a, 2b) und der Datenbroker (3) so eingerichtet und ausgestaltet sind, dass sie im Betrieb des Kommunikationssystems (4) die Verfahrensschritte gemäß einem der Ansprüche 2 bis 10 durchführen.

## Claims

1. Method (1) for exchanging data between several field devices (2, 2a, 2b), wherein the field devices (2, 2a, 2b) are in a communication link based on the publish-subscribe principle via a data broker (3) with a broker functionality, wherein at least one field device (2, 2a, 2b) publishes at least one message with a message title to the data broker (3), wherein at least one field device (2, 2a, 2b) subscribes to a message with at least one specific component of a message title from the data broker (3), wherein the message sent to the data broker (3) is received by the data broker (3) and the data broker (3) forwards the received message to the at least one field device (2), which field device (2) has subscribed to the message with the respective component of the message title from the data broker (3)
wherein an exchange of data based on the request-response principle between a requesting field device (2a) and a responding field device (2b) is implemented by means of the publish-subscribe principle in that a unique field device identifier (F_Resp_ID) of the responding field device (2b) is made known (5) at least to the requesting field device (2a),
wherein the responding field device (2b) subscribes (subscribe: f(F_Resp_ID)) to request messages (6) whose message titles comprise a specification (f(F_Resp_ID)) of the field device identifier (F Resp ID) of the responding field device (2b),
wherein the requesting field device (2a) subscribes (subscribe: Req_ID) to response messages (7) whose message titles comprise a request identifier (Req_ID) known to the requesting field device (2a),
wherein the requesting field device (2a) publishes a request message (6) to the data broker (3), wherein the message title of the request message (6) comprises the request identifier (Req_ID) and the specification (f(F_Resp_ID)) of the field device identifier (F_Resp_ID) of the responding field device (2b),
wherein the responding field device (2b) receives the request message (6) from the requesting field device (2a) on the basis of the subscription to the request messages (6), evaluates (8) the request message (6) and publishes a corresponding response message (7) to the data broker (3), wherein the message title of the response message (7) comprises at least the request identifier (Req_ID), and
wherein the requesting field device (2a) receives the response message (7) of the responding field device (2b) based on the subscription to the response message (7).

2. Method (1) according to claim 1, **characterized in that** the request identifier (Req_ID) is an invariable specification of the field device identifier (F_Req_ID) of the requesting field device (2a) or a unique identifier for each individual request.

3. Method (1) according to claim 1 or 2, **characterized in that** the requesting field device (2a) subscribes (subscribe: f(F_Resp_ID)/Req_ID) to response messages (7), whose message title additionally comprises the specification (f(F_Resp_ID)) for the field device identifier (F_Resp_ID) of the responding field device (2b), and that the message title of the response message (7) additionally comprises the specification (f(F_Resp_ID)) for the field device identifier (F_Resp_ID) of the responding field device (2b).

4. Method (1) according to any one of claims 1 to 3, **characterized in that** the responding field device (2b) subscribes (subscribe: Request/f(F_Resp_ID)) to request messages (6), whose message titles additionally have a request/response identifier, that the requesting field device (2a) subscribes (subscribe: Response/Req_ID) to response messages (7), whose message titles additionally have a request/response identifier,
that the requesting field device (2a) publishes (publish: Request/f(F_Resp_ID)/Req_ID) a request message (6) to the data broker (3), where the message title of the request message (6) additionally has a request/response identifier, that the responding field device (2b) publishes (publish: Response/Req_ID) the response message (7) to the data broker (3), wherein the message title of the response message (7) additionally has a request/response identifier, wherein the request/response identifier identifies either a request or a response, so that a decision can be made by a receiving field device (2, 2a, 2b) whether it is a request or a response to a request by evaluating the request/response identifier.

5. Method (1) according to one of claims 1 to 4, **characterized in that** the responding field device (2b) subscribes (subscribe: ReqResp/f(F_Resp_ID)) to request messages (6), whose message titles additionally have a ReqResp identifier (ReqResp), that the requesting field device (2a) subscribes (subscribe: ReqResp/Req_ID) to response messages, whose message titles additionally have the ReqResp identifier (ReqResp), that the requesting field device (2a) publishes (publish: ReqResp/f(F_Resp_ID)/Req_ID) a request message (6) to the data broker (3), wherein the message title of the request message (6) additionally has the ReqResp identifier (ReqResp), that the responding field device (2b) publishes (publish: ReqResp/Req_ID) the response message (7) to the data broker (3), wherein the message title of the response message (7) additionally has the ReqResp identifier (ReqResp), wherein the ReqResp identifier (ReqResp) identifies a communication via the request/response principle, so that it can be easily decided by evaluating the ReqResp identifier (ReqResp) whether it is a message with which the request/response principle is implemented.

6. Method (1) according to any one of claims 1 to 5, **characterized in that** the responding field device (2b) subscribes (subscribe: ProtocolID/f(F_Resp_ID)) to request messages (6), whose message titles additionally have a protocol identifier (ProtocolID), that the requesting field device (2a) subscribes (subscribe: ProtocolID/Req_ID) to response messages (7), whose message titles additionally have the protocol identifier (ProtocolID), that the requesting field device (2a) publishes (publish: ProtocolID/f(F_Resp_ID)/Req_ID) a request message to the data broker (3), where the message title of the request message (6) additionally has the protocol identifier (ProtocolID), that the responding field device (2b) publishes (publish: ProtocolID/Req_ID) the response message (7) to the data broker (3), wherein the message title of the response message (7) additionally has the protocol identifier (ProtocolID), wherein the protocol identifier (ProtocolID) indicates which communication protocols are understood by a subscribing field device (2, 2a, 2b) and in which protocol a publishing field device (2, 2a, 2b) publishes message contents.

7. Method (1) according to any one of claims 1 to 6, **characterized in that** at least one field device (2, 2a, 2b) with a unique field device identifier (F_Req_ID, F Resp ID) publishes (publish: Identification/F Resp_ID; publish: Identification/F_Req_ID) a log-in message (9) with a log-in message title to the data broker (3), where the log-in message title includes a generic log-in identifier (Identification) and the unique field device identifier (F_Resp_ID; F_Req_ID) of the field device (2, 2a, 2b), that the data broker (3) stores the at least one log-in message (9) and that, in case another field device (2, 2a, 2b) subscribes to messages with the general log-in identification in the message title, the data broker (3) publishes the at least one stored log-in message (9) to the field device (2, 2a, 2b) subscribing to log-in messages (9), and the field device (2, 2a, 2b) subscribing to log-in messages (9) obtains an overview of the participating field devices (2, 2a, 2b) by evaluating the log-in message titles of the received log-in messages (9).

8. Method (1) according to claim 7, **characterized in that** when a field device (2, 2a, 2b) with a unique field device identifier (F_Resp_ID; F_Req_ID) is connected to the data broker (3), the field device (2, 2a, 2b) automatically publishes a log-in message (9) to the data broker (3) and/or that, when a field device (2, 2a, 2b) with a unique field device identifier (F_Resp_ID; F_Req_ID) is connected to the data broker (3), the field device (2, 2a, 2b) automatically subscribes to messages with the general log-in identifier (Identification) in the message title.

9. Method (1) according to claim 7 or 8, **characterized in that** the log-in message title of the log-in message (9) additionally comprises a specification of the field device type and/or the field device manufacturer and/or the field device protocol.

10. Method (1) according to any one of claims 1 to 9, **characterized in that** the broker functionality of the data broker (3) and the communication link based on the publish-subscribe principle are based on the MQTT protocol (Message Queue Telemetry Transport protocol).

11. Communication system (4) with several field devices (2, 2a, 2b) and at least one data broker (3) with a broker functionality, wherein, for the exchange of data between several field devices (2, 2a, 2b), the field devices (2, 2a, 2b) are in a communication link based on the publish-subscribe principle via the data broker (3), wherein at least one field device (2, 2a, 2b) publishes at least one message with a message title to the data broker (3) during operation of the communication system (4), wherein at least one field device (2, 2a, 2b) subscribes to a message with at least one specific component of a message title at the data broker (3), wherein the message published to the data broker (3) is received by the data broker (3) and the data broker (3) forwards the received message to the at least one field device (2, 2a, 2b), which field device (2, 2a, 2b) has subscribed to the message with corresponding component of the message title at the data broker (3)
wherein the field devices (2, 2a, 2b) and the data broker (3) are set up in such a way that, during operation of the communication system, an exchange of data based on the request-response principle between a requesting field device (2a) and a responding field device (2b) is implemented by means of the publish-subscribe principle in that a unique field device identifier (F_Resp_ID) of the responding field device (2b) is made known (5) at least to the requesting field device (2),
wherein the responding field device (2b) subscribes (subscribe: f(F_Resp_ID)) to request messages (6) whose message titles comprise a specification (f(F_Resp_ID)) of the field device identifier (F Resp ID) of the responding field device (2b),
wherein the requesting field device (2a) subscribes (subscribe: Req_ID) to response messages (7) whose message title comprises a request identifier (Req_ID) known to the requesting field device (2a),
wherein the requesting field device (2a) publishes a request message (6) to the data broker (3), wherein the message title of the request message (6) comprises the request identifier (Req_ID) and the specification (f(F_Resp_ID)) of the field device identifier (F_Resp_ID) of the responding field device (2b),
wherein the responding field device (2b) receives the request message (6) from the requesting field device (2a) on the basis of the subscription to the request messages (6), evaluates (8) the request message (6) and publishes a corresponding response message (7) to the data broker (3), wherein the message title of the response message (7) comprises at least the request identifier (Req_ID), and
wherein the requesting field device (2a) receives the response message (7) from the responding field device (2b) on the basis of the subscription to the response message (7).

12. Communication system (4) according to claim 11, **characterized in that** the field devices (2, 2a, 2b) and the data broker (3) are set up and configured to perform the method steps according to any one of claims 2 to 10 during operation of the communication system (4).

## Revendications

1. Procédé (1) d'échange de données entre plusieurs appareils de terrain (2, 2a, 2b), les appareils de terrain (2, 2a, 2b) se trouvant, par le biais d'un courtier en données (a3) ayant une fonctionnalité de courtier, dans une liaison de communication s'appuyant sur le principe de publication-souscription, au moins un appareil de terrain (2, 2a, 2b) envoyant (publiant) au moins un message ayant un titre de message au courtier en données (3), au moins un appareil de terrain (2, 2a, 2b) s'abonnant (souscrivant) auprès du courtier en données (3) à au moins un message comprenant au moins un élément constitutif déterminé d'un titre de message, le message envoyé au courtier en données (3) étant reçu par le courtier en données (3) et le courtier en données (3) retransmettant le message reçu à l'au moins un appareil de terrain (2), lequel appareil de terrain (2) s'étant abonné (ayant souscrit) auprès du courtier en données (3) au message comprenant un élément constitutif correspondant du titre de message,
un échange de données, basé sur le principe demande-réponse, entre un appareil de terrain demandeur (2a) et un appareil de terrain répondeur (2b) étant mis en oeuvre avec les moyens du principe de publication-souscription en ce qu'un identifiant d'appareil de terrain univoque (F_Resp_ID) de l'appareil de terrain répondeur (2b) étant rendu connu (5) de l'au moins l'appareil de terrain demandeur (2a),
l'appareil de terrain répondeur (2b) s'abonnant (souscription : f(F_Resp_ID)) à des messages de demande (6) dont le titre de message comprend une indication (f(F_Resp_ID)) à propos de l'identifiant d'appareil de terrain (F_Resp_ID) de l'appareil de terrain répondeur (2b),
l'appareil de terrain demandeur (2a) s'abonnant (souscription : F_Req_ID) à des messages de réponse (7) dont le titre de message comprend un identifiant de demande (Req_ID) connu de l'appareil de terrain demandeur (2a),
l'appareil de terrain demandeur (2a) envoyant un message de demande (6) au courtier en données (3), le titre de message du message de demande (6) comprenant l'identifiant de demande (Req_ID) et l'indication (f(F_Resp_ID)) à propos de l'identifiant d'appareil de terrain (F_Resp_ID) de l'appareil de terrain répondeur (2b),
l'appareil de terrain répondeur (2b) obtenant le message de demande (6) de l'appareil de terrain demandeur (2a) du fait de l'abonnement aux messages de demande (6), interprétant (8) le message de demande (6) et envoyant un message de réponse (7) correspondant au courtier en données (3), le titre de message du message de réponse (7) comprenant au moins l'identifiant de demande (Req_ID) et
l'appareil de terrain demandeur (2a) obtenant le message de réponse (7) de l'appareil de terrain répondeur (2b) du fait de l'abonnement au message de réponse (7).

2. Procédé (1) selon la revendication 1, **caractérisé en ce que** l'identifiant de demande (Req_ID) est une indication invariable à propos de l'identifiant d'appareil de terrain (F_Req_ID) l'appareil de terrain demandeur (2a) ou un caractère d'identification univoque pour chaque demande individuelle.

3. Procédé selon la revendication 1 ou 2, **caractérisé en ce que** l'appareil de terrain demandeur (2a) s'abonne (souscription : f(F_Resp_ID)/Req_ID) aux messages de réponse (7) dont le titre de message comprend en plus l'indication (f(F_Resp_ID)) à propos de l'identifiant d'appareil de terrain (F_Resp_ID) l'appareil de terrain répondeur (2b), et **en ce que** le titre de message du message de réponse (7) comprend en plus l'indication (f(F_Resp_ID)) à propos de l'identifiant d'appareil de terrain (F_Resp_ID) l'appareil de terrain répondeur (2b).

4. Procédé selon l'une des revendications 1 à 3, **caractérisé en ce que** l'appareil de terrain répondeur (2b) s'abonne (souscription : Request/f(F_Resp_ID)) aux messages de demande (6) dont le titre de message comprend en plus un identifiant Demande/Réponse, **en ce que** l'appareil de terrain demandeur (2a) s'abonne (souscription : Response/Req_ID) aux messages de réponse (7) dont le titre de message comprend en plus un identifiant Request/Response, **en ce que** l'appareil de terrain demandeur (2a) envoie (publication : Request/f(F_Resp_ID)/Req_ID) un message de demande (6) au courtier en données (3), le titre de message du message de demande (6) présentant en plus un identifiant Request/Response, **en ce que** l'appareil de terrain répondeur (2b) envoie (publication : Response/Req_ID) le message de réponse (7) au courtier en données (3), le titre de message du message de réponse (7) présentant en plus un identifiant Request/Response, l'identifiant Request/Response identifiant soit une demande (Request), soit une réponse (Response), de sorte que l'interprétation de l'identifiant Request/Response permet à un appareil de terrain (2, 2a, 2b) récepteur de décider s'il s'agit d'une demande ou d'une réponse à une demande.

5. Procédé selon l'une des revendications 1 à 4, **caractérisé en ce que** l'appareil de terrain répondeur (2b) s'abonne (souscription : ReqResp/f(F_Resp_ID)) aux messages de demande (6) dont le titre de message comprend en plus un identifiant ReqResp (ReqResp), **en ce que** l'appareil de terrain demandeur (2a) s'abonne (souscription : ReqResp/Req_ID) aux messages de réponse dont le titre de message comprend en plus l'identifiant ReqResp (ReqResp), **en ce que** l'appareil de terrain demandeur (2a) envoie (publication : ReqResp/f(F_Resp_ID)/Req_ID) un message de demande (6) au courtier en données (3), le titre de message du message de demande (6) présentant en plus l'identifiant ReqResp (ReqResp), **en ce que** l'appareil de terrain répondeur (2b) envoie (publication : ReqResp/Req_ID) le message de réponse (7) au courtier en données (3), le titre de message du message de réponse (7) présentant en plus l'identifiant ReqResp (ReqResp), l'identifiant ReqResp (ReqResp) identifiant une communication selon le principe Demande/Réponse, de sorte que l'interprétation de l'identifiant ReqResp (ReqResp) permet de décider facilement s'il s'agit d'un message avec lequel est réalisé le principe Demande/Réponse.

6. Procédé selon l'une des revendications 1 à 5, **caractérisé en ce que** l'appareil de terrain répondeur (2b) s'abonne (souscription : ProtocolID/f(F_Resp_ID)) aux messages de demande (6) dont le titre de message comprend en plus un identifiant de protocole (ProtocolID), **en ce que** l'appareil de terrain demandeur (2a) s'abonne (souscription : ProtocolID/F_Req_ID) aux messages de réponse (7) dont le titre de message comprend en plus l'identifiant de protocole (ProtocolID), **en ce que** l'appareil de terrain demandeur (2a) envoie (publication : ProtocolID/f(F_Resp_ID)/Req_ID) un message de demande au courtier en données (3), le titre de message du message de demande (6) présentant en plus l'identifiant de protocole (ProtocolID), **en ce que** l'appareil de terrain répondeur (2b) envoie (publication : ProtocolID/Req_ID) le message de réponse (7) au courtier en données (3), le titre de message du message de réponse (7) présentant en plus l'identifiant de protocole (ProtocolID), l'identifiant de protocole (ProtocolID) indiquant quels protocoles de communication sont envoyés par un appareil de terrain (2, 2a, 2b) abonné et dans quel protocole un appareil de terrain (2, 2a, 2b) émetteur envoie des contenus de message.

7. Procédé selon l'une des revendications 1 à 6, **caractérisé en ce qu'**au moins un appareil de terrain (2, 2a, 2b) ayant un identifiant d'appareil de terrain (F_Req_ID ; F_Resp_ID) univoque envoie (publication : Identification/F_Resp_ID ; publication : Identification/F_Req_ID) un message de connexion (9) comprenant un titre de message de connexion au courtier en données (3), le titre de message de connexion comprenant un identifiant de connexion général (Identification) et l'identifiant d'appareil de terrain (F_Req_ID ; F_Resp_ID) univoque de l'appareil de terrain (2, 2a, 2b), **en ce que** le courtier en données (3) mémorise l'au moins un message de connexion (9) et **en ce que** dans le cas où un autre appareil de terrain (2, 2a, 2b) s'abonne aux messages ayant l'identifiant de connexion général (Identification) dans le titre de message, le courtier en données (3) envoie l'au moins un message de connexion (9) à l'appareil de terrain (2, 2a, 2b) abonné aux messages de connexion (9), et l'appareil de terrain (2, 2a, 2b) abonné aux messages de connexion (9) obtient une vue d'ensemble des appareils de terrain (2, 2a, 2b) participants en interprétant le titre de message de connexion des messages de connexion (9) reçus.

8. Procédé (1) selon la revendication 7, **caractérisé en ce que** lors du raccordement d'un appareil de terrain (2, 2a, 2b) ayant un identifiant d'appareil de terrain (F_Resp_ID ; F_Req_ID) univoque au courtier en données (3), l'appareil de terrain (2, 2a, 2b) envoie automatiquement un message de connexion (9) au courtier en données (3) et/ou **en ce que** lors du raccordement d'un appareil de terrain (2, 2a, 2b) ayant un identifiant d'appareil de terrain (F_Resp_ID ; F_Req_ID) univoque au courtier en données (3), l'appareil de terrain (2, 2a, 2b) s'abonne automatiquement aux messages ayant l'identifiant de connexion général (Identification).

9. Procédé (1) selon la revendication 7 ou 8, **caractérisé en ce que** le titre de message de connexion du message de connexion (9) comprend en plus une indication à propos du type d'appareil de terrain et/ou à propos du fabricant d'appareil de terrain et/ou à propos du protocole d'appareil de terrain.

10. Procédé (1) selon l'une des revendications 1 à 9, **caractérisé en ce que** la fonctionnalité de courtier du courtier en données (3) et la liaison de communication s'appuyant sur le principe de publication-souscription s'appuient sur le protocole MQTT (Message Queue Telemetry Transport - Transport de télémétrie par mise en file d'attente des messages).

11. Système de communication (4) comprenant plusieurs appareils de terrain (2, 2a, 2b) et au moins un courtier en données (3) ayant une fonctionnalité de courtier, les appareils de terrain (2, 2a, 2b), en vue de l'échange de données entre plusieurs appareils de terrain (2, 2a, 2b), se trouvant, par le biais du courtier en données (3), dans une liaison de communication s'appuyant sur le principe de publication-souscription, en fonctionnement du système de communication (4), au moins un appareil de terrain (2, 2a, 2b) envoyant (publiant) au moins un message ayant un titre de message au courtier en données (3), au moins un appareil de terrain (2, 2a, 2b) s'abonnant (souscrivant) auprès du courtier en données (3) à au moins un message comprenant au moins un élément constitutif déterminé d'un titre de message, le message envoyé au courtier en données (3) étant reçu par le courtier en données (3) et le courtier en données (3) retransmettant le message reçu à l'au moins un appareil de terrain (2, 2a, 2b), lequel appareil de terrain (2, 2a, 2b) s'étant abonné auprès du courtier en données (3) au message comprenant un élément constitutif correspondant du titre de message,
les appareil de terrain (2, 2a, 2b) et le courtier en données (3) étant conçus de telle sorte que lors du fonctionnement du système de communication, un échange de données, basé sur le principe demande-réponse, entre un appareil de terrain demandeur (2a) et un appareil de terrain répondeur (2b) est mis en oeuvre avec les moyens du principe de publication-souscription en ce qu'un identifiant d'appareil de terrain univoque (F_Resp_ID) de l'appareil de terrain répondeur (2b) étant rendu connu (5) de l'au moins l'appareil de terrain demandeur (2), l'appareil de terrain répondeur (2b) s'abonnant (souscription : f(F_Resp_ID)) à des messages de demande (6) dont le titre de message comprend une indication (f(F_Resp_ID)) à propos de l'identifiant d'appareil de terrain (F_Resp_ID) de l'appareil de terrain répondeur (2b),
l'appareil de terrain demandeur (2a) s'abonnant (souscription : F_Req_ID) à des messages de réponse (7) dont le titre de message comprend un identifiant de demande (Req_ID) connu de l'appareil de terrain demandeur (2a),
l'appareil de terrain demandeur (2a) envoyant un message de demande (6) au courtier en données (3), le titre de message du message de demande (6) comprenant l'identifiant de demande (Res_ID) et l'indication (f(F_Resp_ID)) à propos de l'identifiant d'appareil de terrain (F_Resp_ID) de l'appareil de terrain répondeur (2b),
l'appareil de terrain répondeur (2b) obtenant le message de demande (6) de l'appareil de terrain demandeur (2a) du fait de l'abonnement aux messages de demande (6), interprétant (8) le message de demande (6) et envoyant un message de réponse (7) correspondant au courtier en données (3), le titre de message du message de réponse (7) comprenant au moins l'identifiant de demande (Req_ID) et
l'appareil de terrain demandeur (2a) obtenant le message de réponse (7) de l'appareil de terrain répondeur (2b) du fait de l'abonnement au message de réponse (7).

12. Système de communication (4) selon la revendication 11, **caractérisé en ce que** les appareils de terrain (2, 2a, 2b) et le courtier en données (3) sont conçus et configurés de telle sorte que lors du fonctionnement du système de communication (4), ils exécutent les étapes du procédé selon l'une des revendications 2 à 10.
